# FASCICULE DE BREVET EUROPEEN

(11) **EP 2 386 892 B1**
(45) Date de publication et mention de la délivrance du brevet: **16.11.2016**
(21) Numéro de dépôt: 11165155.0
(22) Date de dépôt: 06.05.2011
(51) Int. Cl.: G02B 6/44

(54) **Boîtier de raccordement de fibres optiques**
Verbindungsgehäuse für optische Faser
Connecting housing for optical fibres

(30) Priorité: 12.05.2010 FR 1053722
(43) Date de publication de la demande: 16.11.2011
(73) Titulaire: Nexans, 75008 Paris (FR)
(72) Inventeur: Becarelli, Stéphane, 78800 Houilles (FR); Renard, Xavier, 78410 Aubergenville (FR); Apere, Rodolphe, 78570 Andresy (FR)
(74) Mandataire: Gauer, Pierre

(56) Documents cités:
- EP-A1- 1 944 886
- WO-A1-2008/017622
- US-A1- 2005 213 920

## Description

La présente invention a pour objet un boîtier de raccordement de fibres optiques. Elle concerne en particulier un boîtier permettant de raccorder des fibres optiques d'un utilisateur à des fibres optiques issues d'un câble d'acheminement de fibres optiques.

Ce type de boîtier de raccordement de fibres optiques comprend au moins un raccord apte à raccorder des fibres optiques d'un utilisateur à des fibres optiques issues d'un câble d'acheminement de fibres optiques.

La connexion entre le raccord et les fibres optiques de l'utilisateur s'effectue à l'aide d'un connecteur, typiquement une fiche mâle, qui est insérée dans une partie femelle du raccord, en bas du boîtier.

Le connecteur de l'utilisateur constitue une zone sensible, car le connecteur est généralement inséré dans le raccord à proximité du sol. Le connecteur peut ainsi être soumis à différents contacts comme des coups de pieds ou des passages d'objets, comme par exemple un balai ou un aspirateur. Ces différents contacts sont susceptibles d'endommager le connecteur ou de le déconnecter du raccord.

On connaît différentes solutions pour remédier à ce problème.

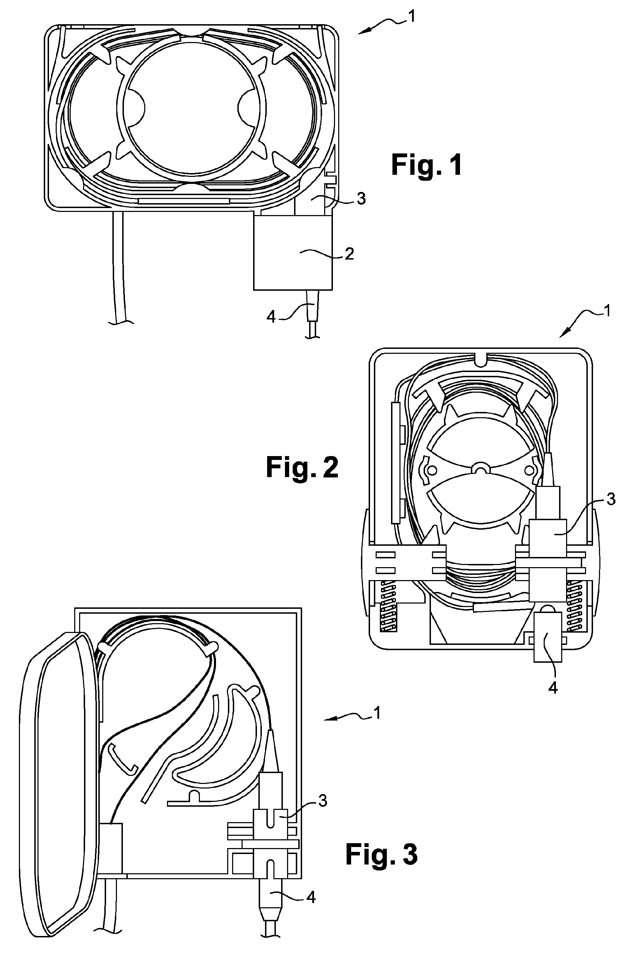

Une première solution, tel qu'illustré à la figure 1, consiste à munir le boîtier 1 de raccordement de fibres optiques d'un capot 2 recouvrant partiellement le raccord 3 et le connecteur 4. Cette solution est toutefois peu esthétique et ne protège pas efficacement le connecteur.

Il est également connu, tel qu'illustré à la figure 2, sur laquelle les éléments identiques à ceux de la figure 1 portent les mêmes références, d'intégrer le raccord 3 à l'intérieur du boîtier 1. Ceci a pour inconvénient d'augmenter le dimensionnement du boîtier s'il y a plusieurs raccords et d'être peu ergonomique pour l'installation du connecteur.

Une troisième solution consiste à disposer le raccord 3 en bordure du boîtier 1 (figure 3). Dans ce cas, le raccord 3 est protégé, mais pas le connecteur 4.

L'invention vise à remédier à ces inconvénients.

L'invention propose en particulier un boîtier de raccordement de fibres optiques qui permet de protéger le connecteur et qui permet d'installer et de désinstaller facilement le connecteur.

L'invention a ainsi pour objet un boîtier de raccordement de fibres optiques, comprenant un corps de boîtier et au moins un raccord de fibres optiques apte à être relié à un connecteur d'un utilisateur.

Le boîtier selon l'invention comprend un volet monté sur le corps de boîtier et lié au corps de boîtier par une liaison pivot, le volet étant mobile entre une position fermée permettant la protection de chaque connecteur et une position ouverte permettant l'accès de l'utilisateur à chaque connecteur, notamment par l'avant du boîtier, le volet en position fermée étant apte à recouvrir partiellement chaque connecteur. L'utilisation d'un volet mobile permet à la fois de protéger les connecteurs et d'accéder aux connecteurs pour les insérer ou les retirer.

Chaque raccord est de préférence disposé à l'intérieur du corps de boîtier.

Chaque raccord peut déboucher au niveau de la bordure inférieure du corps de boîtier, de sorte que l'utilisateur peut accéder à chaque connecteur par le dessous du boîtier lorsque le volet est en position fermée. En effet, dans ce cas, chaque connecteur dépasse avantageusement de la bordure inférieure du corps de boîtier.

Le connecteur peut être immobile par rapport au boîtier.

Le volet peut être disposé en bordure inférieure du boîtier.

La bordure inférieure du corps de boîtier peut être située au-dessus de l'extrémité inférieure du volet en position fermée, au moins sur la partie du corps de boîtier recouvrant les raccords. En d'autres termes, l'extrémité ou bordure inférieure du corps de boîtier située derrière le volet peut être recouverte par le volet en position fermée, au moins sur la partie du corps de boîtier recouvrant le ou les raccords. De cette façon, on crée un espace de préhension des connecteurs.

Le volet peut comprendre des moyens de repérage de chaque raccord.

Chaque moyen de repérage peut comprendre une couleur associée à un raccord.

Le volet peut être transparent. On peut ainsi voir un identifiant du boîtier lorsque le volet est en position fermée.

Le boîtier peut comprendre des moyens de maintien du volet en position ouverte et en position fermée, par exemple des godrons.

D'autres caractéristiques et avantages de la présente invention apparaîtront plus clairement à la lecture de la description suivante donnée à titre d'exemple illustratif et non limitatif et faite en référence aux dessins annexés sur lesquels :
- les figures 1 à 3, déjà décrites, illustrent des boîtiers de raccordement de fibres optiques selon l'état de la technique,
- la figure 4 est une vue de face d'un boîtier selon l'invention, et
- les figures 5 et 6 sont des vues en perspective du boîtier.

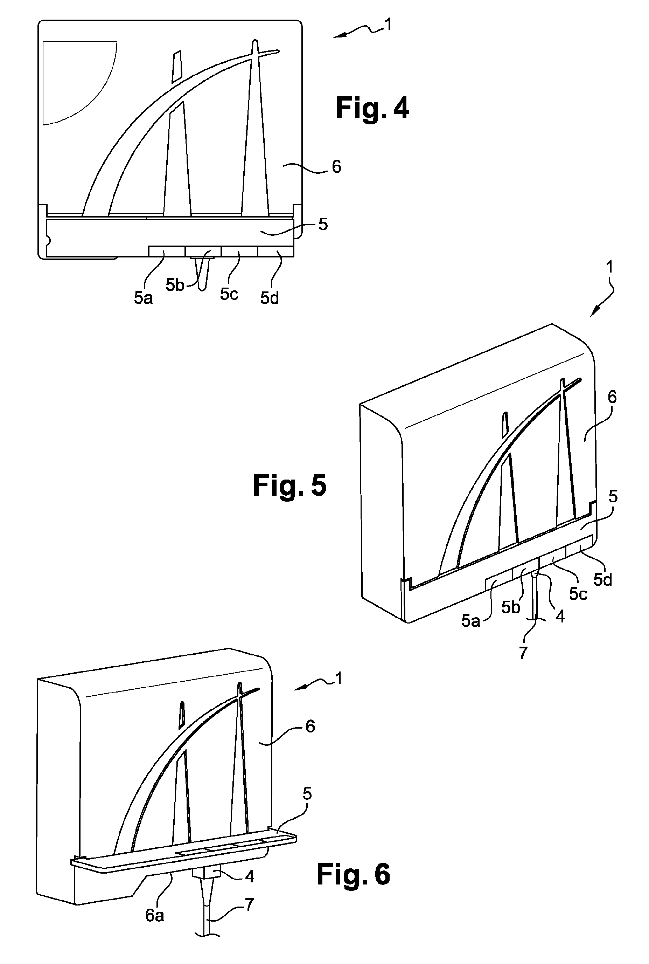

Le boîtier 1 de raccordement de fibres optiques selon l'invention, tel qu'illustré à la figure 4, comprend un corps de boîtier 6 sensiblement parallélépipédique ainsi qu'un volet mobile 5, amovible ou non, disposé en bordure inférieure du corps de boîtier 6. Le corps de boîtier 6 peut être un couvercle du boîtier 1 destiné à recouvrir une base du boîtier 1 comprenant des raccords de fibres optiques et au moins une cassette de lovage de fibres et de maintien d'épissures. Le volet 5 est en rotation autour d'un axe horizontal situé en haut du volet 5 et dans le sens de la longueur du corps de boîtier 6. Le volet 5 est muni de quatre zones de repérage 5a,5b,5c,5d permettant de repérer quatre raccords disposés derrière le volet. En effet, dans les zones d'habitation denses, il est fréquent d'utiliser dans le même boîtier quatre raccords permettant d'accéder à quatre fibres optiques, chaque fibre optique étant associée à un opérateur différent.

Les zones de repérage 5a,5b,5c,5d peuvent être quatre zones 5a,5b,5c,5d de couleurs différentes, chaque couleur correspondant à un opérateur. Les zones de marquage 5a,5b,5c,5d peuvent par exemple être disposées sur une étiquette amovible.

On peut également faire figurer sur le volet 5 un logo laser signalant une source laser. Il est également possible de positionner un identifiant sur une zone du corps de boîtier 6 située sous le volet 5.

Les figures 5 et 6, sur lesquelles les éléments identiques à ceux de la figure 4 portent les mêmes références, montrent le boîtier 1 en configuration opérationnelle, c'est-à-dire lorsqu'il est connecté à un connecteur 4 d'un utilisateur. Le connecteur 4 permet de connecter une fibre optique issue d'un cordon optique 7 à une fibre optique située à l'intérieur du boîtier 1 et connectée à un des quatre raccords situés à l'intérieur du boîtier 1.

Le volet 5, tel qu'illustré à la figure 5, est en position fermée, c'est-à-dire que le volet 5 est rabattu sur le corps de boîtier 6. Le volet 5 protège le connecteur 4 en recouvrant au moins partiellement le connecteur 4, formant ainsi une barrière de protection entre le connecteur 4 et l'utilisateur. Le repérage des raccords est réalisé grâce aux quatre couleurs des quatre zones 5a,5b,5c,5d. La position fermée du volet 5 assure la protection du connecteur 4.

La figure 6 montre le volet mobile 2 en position ouverte. La position ouverte du volet 5 libère la barrière de protection et laisse apparente au moins une partie du connecteur 4 et permet ainsi à l'utilisateur d'accéder au connecteur 4 par l'avant du boîtier 1. La bordure inférieure 6a du corps de boîtier 6, au niveau de laquelle débouchent les raccords, s'étend avantageusement au-dessus de l'extrémité inférieure du volet 5 en position fermée, au moins sur la partie du boîtier 1 recouvrant les raccords, de manière à libérer un espace vide constituant une zone de préhension pour l'utilisateur.

L'extrémité inférieure du corps de boîtier 6 située du côté de la zone de préhension, dans le sens la profondeur du corps de boîtier 6, entre l'avant et l'arrière du corps de boîtier 6, peut être concave, de manière à protéger latéralement le connecteur 4 tout en délimitant la zone de préhension.

Ainsi, l'utilisation d'un volet permet de laisser un volume libre autour de chaque connecteur, même lorsque le volet est en position fermée. Le volet ouvert procure une bonne ergonomie pour l'insertion et l'extraction du connecteur. Une fois fermé, le volet protège le connecteur. Le marquage, amovible ou non, situé sur le volet permet l'identification des différents opérateurs. L'identification par marquage ou étiquette amovible est particulièrement économique. Le volet a également une fonction esthétique, puisqu'il masque le connecteur lorsqu'il est en position fermée.

## Revendications

1. Boîtier (1) de raccordement de fibres optiques, comprenant un corps de boîtier (6) et au moins un raccord de fibres optiques (3) apte à être relié à un connecteur (4) d'un utilisateur, **caractérisé en ce que** le boîtier (1) comprend un volet (5) monté sur le corps de boîtier (6) et lié au corps de boîtier (6) par une liaison pivot, le volet (5) étant mobile en rotation entre une position fermée pour laquelle il se rabat sur le corps du boitier (6) et recouvre la bordure inférieure (6A) du corps du boitier (6) de sorte qu'il forme une barrière de protection entre le connecteur (4) et l'utilisateur, et une position ouverte où il découvre la bordure inférieure (6A) du corps du boitier (6) et permet l'accès de l'utilisateur à chaque connecteur (4) par l'avant du boitier, et **en ce que** le volet (5) en position fermée est apte à recouvrir partiellement et à masquer chaque connecteur (4); le boitier (1) comprenant des moyens de maintien du volet (5) en position ouverte.

2. Boîtier (1) selon la revendication 1, **caractérisé en ce que** chaque raccord est disposé à l'intérieur du corps de boîtier (6).

3. Boîtier (1) selon la revendication 2, **caractérisé en ce que** chaque raccord débouche au niveau de la bordure inférieure (6a) du corps de boîtier (6), de sorte que l'utilisateur peut accéder à chaque connecteur (4) par le dessous du boîtier (1) lorsque le volet (5) est en position fermée.

4. Boîtier (1) selon l'une des revendications 1 à 3, **caractérisé en ce que** le connecteur (4) est immobile par rapport au boîtier (1).

5. Boîtier (1) selon l'une des revendications 1 à 4, **caractérisé en ce que** la bordure inférieure (6a) du corps de boîtier (6) située derrière le volet (5) est recouverte par le volet (5) en position fermée, au moins sur la partie du corps de boîtier (6) recouvrant le ou les raccords.

6. Boîtier (1) selon l'une des revendications 1 à 5, **caractérisé en ce que** le volet (5) comprend des moyens de repérage (5a, 5b, 5c, 5d) de chaque raccord.

7. Boîtier (1) selon la revendication 6, **caractérisé en ce que** chaque moyen de repérage (5a, 5b, 5c, 5d) comprend une couleur associée à un raccord.

8. Boîtier (1) selon l'une des revendications 1 à 7, **caractérisé en ce que** le volet (5) est transparent.

9. Boîtier (1) selon l'une des revendications 1 à 8, **caractérisé en ce qu'**il comprend des moyens de maintien du volet (5) en position ouverte et en position fermée.

## Patentansprüche

1. Verbindungsgehäuse (1) optischer Fasern, umfassend einen Gehäusekörper (6) und mindestens einen Anschluss optischer Fasern (3), der imstande ist, mit einem Verbinder (4) eines Benutzers verbunden zu sein, **dadurch gekennzeichnet, dass** das Gehäuse (1) eine auf dem Gehäusekörper (6) montierte und mit dem Gehäusekörper (6) mittels einer Schwenkverbindung verbundene Klappe (5) umfasst, wobei die Klappe (5) zwischen einer geschlossenen Stellung, für welche sie sich auf den Gehäusekörper (6) herunterklappt und den unteren Rand (6A) des Gehäusekörpers (6) derart bedeckt, dass sie eine Schutzbarriere zwischen dem Verbinder (4) und dem Benutzer bildet, und einer geöffneten Stellung, in der sie den unteren Rand (6A) des Gehäusekörpers (6) aufdeckt und den Zugriff des Benutzers auf jeden Verbinder (4) von der Vorderseite des Gehäuses erlaubt, rotierend bewegbar ist, und dass die Klappe (5) in geschlossener Stellung imstande ist, jeden Verbinder (4) teilweise zu bedecken und zu kaschieren, wobei das Gehäuse (1) Haltemittel der Klappe (5) in geöffneter Stellung umfasst.

2. Gehäuse (1) nach Anspruch 1, **dadurch gekennzeichnet, dass** jeder Anschluss im Innern des Gehäusekörpers (6) angeordnet ist.

3. Gehäuse (1) nach Anspruch 2, **dadurch gekennzeichnet, dass** jeder Anschluss im Bereich des unteren Rands (6a) des Gehäusekörpers (6) ausmündet, so dass der Benutzer auf jeden Verbinder (4) von der Unterseite des Gehäuses (1) Zugriff hat, wenn die Klappe (5) in geschlossener Stellung ist.

4. Gehäuse (1) nach einem der Ansprüche 1 bis 3, **dadurch gekennzeichnet, dass** der Verbinder (4) in Bezug zum Gehäuse (1) unbeweglich ist.

5. Gehäuse (1) nach einem der Ansprüche 1 bis 5, **dadurch gekennzeichnet, dass** der untere Rand (6a) des Gehäusekörpers (6), der sich hinter der Klappe (5) befindet, von der Klappe (5) in geschlossener Stellung mindestens über den Abschnitt des Gehäusekörpers (6), der den oder die Anschlüsse bedeckt, bedeckt ist.

6. Gehäuse (1) nach einem der Ansprüche 1 bis 5, **dadurch gekennzeichnet, dass** die Klappe (5) Kennzeichnungsmittel (5a, 5b, 5c, 5d) jedes Anschlusses umfasst.

7. Gehäuse (1) nach Anspruch 6, **dadurch gekennzeichnet, dass** jedes Kennzeichnungsmittel (5a, 5b, 5c, 5d) eine einem Anschluss zugeordnete Farbe umfasst.

8. Gehäuse (1) nach einem der Ansprüche 1 bis 7, **dadurch gekennzeichnet, dass** die Klappe (5) durchsichtig ist.

9. Gehäuse (1) nach einem der Ansprüche 1 bis 8, **dadurch gekennzeichnet, dass** es Haltemittel der Klappe (5) in geöffneter Stellung und in geschlossener Stellung umfasst.

## Claims

1. A box (1) for connecting optical fibers, comprising a box body (6) and at least one optical fiber termination (3) able to be connected to a connector (4) of a user, **characterized in that** the box (1) comprises a flap (5) mounted on the box body (6) and connected to the box body (6) by a pivot link, the flap (5) being rotatable between a closed position in which it folds down on the box body (6) and covers the lower edge (6A) of the box body (6) such that it forms a protective barrier between the connector (4) and the user, and an open position where it exposes the lower edge (6A) of the box body (6) and allows the user to access each connector (4) via the front of the box, and **in that** the flap (5) in the closed position is able to partially cover and conceal each connector (4); the box (1) comprising means for keeping the flap (5) in the open position.

2. The box (1) according to claim 1, **characterized in that** each termination is arranged inside the box body (6).

3. The box (1) according to claim 2, **characterized in that** each termination emerges at the lower edge (6a) of the box body (6), such that the user can access each connector (4) through the bottom of the box (1) when the flap (5) is in the closed position.

4. The box (1) according to one of claims 1 to 3, **characterized in that** the connector (4) is immobile relative to the box (1).

5. The box (1) according to one of claims 1 to 4, **characterized in that** the lower edge (6a) of the box body (6) situated behind the flap (5) is covered by the flap (5) in the closed position, at least over the part of the box body (6) covering the termination(s).

6. The box (1) according to one of claims 1 to 5, **characterized in that** the flap (5) comprises identification means (5a, 5b, 5c, 5d) for each termination.

7. The box (1) according to claim 6, **characterized in that** each identification means (5a, 5b, 5c, 5d) comprises a color associated with a termination.

8. The box (1) according to one of claims 1 to 7, **characterized in that** the flap (5) is transparent.

9. The box (1) according to one of claims 1 to 8, **characterized in that** it comprises maintaining means for keeping the flap (5) in the open position and in the closed position.
